**Europäisches Patentamt**

**European Patent Office**

**Office européen des brevets**

(19)

(11) Veröffentlichungsnummer : **0 531 363 B1**

(12) **EUROPÄISCHE PATENTSCHRIFT**

(45) Veröffentlichungstag der Patentschrift :
**07.09.94 Patentblatt 94/36**

(51) Int. Cl.⁵ : **H01B 3/30,** H02G 15/00,
C08G 18/36, C08G 18/65

(21) Anmeldenummer : **91909877.2**

(22) Anmeldetag : **21.05.91**

(86) Internationale Anmeldenummer :
**PCT/EP91/00940**

(87) Internationale Veröffentlichungsnummer :
**WO 91/19298 12.12.91 Gazette 91/28**

(54) **BRÖSELMASSE ZUM ABDICHTEN VON KABELMUFFEN.**

(30) Priorität : **30.05.90 DE 4017444**

(43) Veröffentlichungstag der Anmeldung :
**17.03.93 Patentblatt 93/11**

(45) Bekanntmachung des Hinweises auf die
Patenterteilung :
**07.09.94 Patentblatt 94/36**

(84) Benannte Vertragsstaaten :
**AT BE CH DE ES FR GB IT LI NL**

(56) Entgegenhaltungen :
US-A- 4 029 626
DATABASE WPIL, No. 85-112782, Derwent Publications Ltd, (London, GB); & JP-A-60 053
522

(56) Entgegenhaltungen :
**CHEMICAL ABSTRACTS, Vol. 107, No. 14, October 1987, page 78, abstract No. 117066v,
(Columbus, Ohio, US); & JP-A-62 30 159
DATABASE WPIL, No. 86-187076, Derwent Publications Ltd, (London, GB); & JP-A-61 120
821**

(73) Patentinhaber : **Henkel
Kommanditgesellschaft auf Aktien
D-40191 Düsseldorf (DE)**

(72) Erfinder : **HÖFER, Rainer
Klever Strasse 31
D-4000 Düsseldorf 30 (DE)**
Erfinder : **STOLL, Gerhard
Danziger Strasse 69
D-4052 Korschenbroich (DE)**
Erfinder : **DAUTER, Peter
Kreuzeskirchstrasse 5
D-4300 Essen 1 (DE)**
Erfinder : **GRÜTZMACHER, Roland
Heinrich-Heine-Strasse 2
D-5603 Wülfrath (DE)**

EP 0 531 363 B1

## Beschreibung

Die Erfindung betrifft Bröselmassen aus einer Polyolkomponente und einer Isocyanatkomponente, beispielsweise zum Abdichten von Kabelmuffen.

Auf vielen Gebieten der Technik ist es erforderlich, ein Gehäuse, ein Rohr oder ähnliche Gegenstände an dem oder den offenen Enden so zu verschließen, daß Feuchte oder Wasser in das Innere nicht eindringen kann.

Dies gilt insbesondere fur Kabel zur Übertragung von Informationen beispielsweise in der Nachrichtentechnik. Diese Kabel werden üblicherweise unterirdisch verlegt und sind dort Umgebungseinflüssen, beispielsweise wechselnden Temperaturen oder wechselnden Feuchtigkeitsbedingungen ausgesetzt. Beim Verlegen der Kabel ist darauf zu achten, daß die im Inneren des Kabels vorhandenen Feuchtigkeitsverhältnisse sich spater nicht mehr ändern konnen, wie es durch möglichen Eintritt von Wasser oder Feuchte geschehen könnte.

Kabel der Nachrichtentechnik bestehen aus einer Vielzahl von elektrisch leitenden Adern, die gebündelt sind und bei dem mehrere solche Bündel in einer äußeren Schutzumhüllung untergebracht sind. Für die Verbindung zweier solcher Kabel oder auch für das Verbinden unterschiedlich aufgebauter Kabel ist es erforderlich, diese Aderbündel aufzuspleißen und mit den Adern des anderen Kabelstücks zu verbinden. Die einzelnen so verbundenen Adern müssen gegeneinander wieder isoliert werden, so daß ein räumlich zum Teil wesentlich größeres Gebilde entsteht. Da die Isolation der einzelnen Adern geöffnet wurde, muß dieses Gebilde gegen das Eindringen von Feuchte oder Wasser geschützt werden; dieses geschieht durch sogenannte Kabelgarnituren als Verbindungsstücke, die aus einer Kabelmuffe und darin untergebrachtem Kunststoffmaterial bestehen.

An die Kunststoffmaterialien, die zum feuchtedichten Verschluß (hermetische Abdichtung) von Hohlkörpern, insbesondere von Kabeln dienen, sind eine Reihe von Anforderungen zu stellen:

1. Die Viskosität bei der Verarbeitung sollte möglichst gering sein, damit das Kunststoffmaterial auch bei niedrigen Temperaturen zwischen die Aderbündel und zwischen die miteinander verbundenen Adern leicht eindringen kann.

2. Die Selbstaushartung des Materials sollte möglichst schnell erfolgen, wobei die sogenannte Topfzeit in dem jeweiligen Temperaturbereich der Verarbeitung wenigstens etwa 5 Minuten betragen soll.

3. Das Kunststoffmaterial muß ein gutes Selbstaushärtevermögen bei Temperaturen im Bereich von -10 bis 15°C aufweisen, damit das Verlegen von Kabeln moglichst jahreszeitenunabhangig durchgeführt werden kann.

4. Die Elastizität des ausgehärteten Kunststoffmaterials soll hoch sein, damit temperaturbedingte Volumenänderungen der Metallteile ausgeglichen werden.

5. Das Klebevermögen der Masse, d. h. die Eigenschaft an dem Material der Kabelmuffe, dem Isoliermaterial der einzelnen Adern und dem Isoliermaterial der miteinander verbundenen Adern fest zu haften, muß gut sein.

6. Hohe Resistenz gegen Feuchtigkeit und Wasserdurchlässigkeit sind ebenfalls wesentliche Voraussetzungen.

7. Das ausgehärtete Kunststoffmaterial sollte möglichst hoch kerbanfällig sein, also bröseln, damit die Kunststoffüllung beim Öffnen einer solchen Kabelverbindung, die beispielsweise aus zwei zusammengesetzten Schalenhälften besteht, in einfacher Weise, möglichst ohne Anwendung von Werkzeugen, von Hand entfernt werden kann.

8. Im ausgehärteten Zustand soll das Kunststoffmaterial einen hohen Isolationswiderstand aufweisen, der möglichst mehr als $10^{11}$ cm bei Beanspruchung mit mindestens 1 kV/mm beträgt. Die Forderung nach hohem Isolationswiderstand gilt auch nach Lagerung des Materials in Wasser und verschiedenen Chemikalien. Die Dielektrizitätskonstante und der Verlustwinkel sollte möglichst klein sein. Wenn das Material mit sauren oder alkalischen Flüssigkeiten in Berührung kommt, soll es bei mindestens sechsunddreißigstündiger Lagerung bei 38°C die Funktionsfähigkeit bewahren. Schließlich soll das Kunststoffmaterial gegenüber dem Einfluß von Dieselöl, Pilzen oder Mikroben resistent sein.

Die bisher bekannten Füllmassen auf der Basis verschiedener Kunststoffmaterialien wie beispielsweise Polyurethan erfüllen entweder diese Forderungen nicht befriedigend oder überhaupt nicht. Der englische Derwent Abstract Nr. 86-187 076 der JP-A-61 120 821 beschreibt el. Isoliermassen aus Polyolen (dehydratisiertem Rizinnsöl, hydroxyliertem Polybutadien u.ä. Polymeren bzw. einer Kombination dieser Polyole) und Polyisocyanaten. Der vorliegenden Erfindung liegt die Aufgabe zugrunde eine Bröselmasse, insbesondere zum Abdichten von Kabeln oder Kabelverbindungen, zur Verfügung zu stellen, die die aufgeführten Anforderungen in befriedigender Weise erfüllt.

Die erfindungsgemäße Aufgabe wird durch die Bröselmasse gemäß Anspruch 1 gelöst. Weitere vorteilhafte Ausgestaltungen der Erfindung ergeben sich aus den nachfolgenden weiteren Ansprüchen.

Die erfindungsgemäße Bröselmasse ist das Reaktionsprodukt aus der Isocyanatkomponente und einer speziellen Polyolmischung aus den Polyolkomponenten I und II, wobei die Komponente I Rizinenöl ist.

Unter den an sich bekannten Diisocyanatverbindungen wird als bevorzugte Diisocyanatkomponente Diphenylmethan-4,4'-diisocyanat eingesetzt. Vorzugsweise besitzt es einen Effektivgehalt von 93 %, eine Viskosität bei 20°C von 100 bis 150 mPa·s und einen NCO-Gehalt von 30 bis 32 %. Hierbei ist der Effektivgehalt durch den NCO-Gehalt in einem Mol Diisocyanat definiert. Auch Tris-6-isocyanurat und 1,3,5-Tris(6-Isocyanathexyl)-Biuret sind besonders geeignet.

Die Polyolmischungskomponente I (Rizinenöl) entsteht durch eine spezielle Dehydratierungsreaktion aus Rizinusöl. Dabei bildet sich aus der Rizinolsäure (12-Hydroxyoctadcen-9-carbonsäure 1) ein Gemisch aus 9.11 und 9.12 - Octadecadiensäure (s.a. Winnacker-Küchler, 4. Aufl., Bd. 6, Org. Technologie II, München, Wien 1982, S. 745ff.).

Die Polyolkomponente II besteht aus der Komponente IIb. Die Komponente IIb ist ein Esterpolyole enthaltendes Ringöffnungsprodukt eines epoxidierten Pflanzenöls mit gesättigten oder ungesättigten kurzkettigen linearen oder verzweigten Fettsäuren des bevorzugten Kettenlängenbereiches $C_6$ bis $C_{22}$. Derartige Ringöffnungsprodukte werden in der DE 39 35 127.0 beschrieben.

Das diesbezügliche Ringöffnungsprodukt von Sojaölepoxid mit gesättigten linearen $C_6$-$C_{10}$ Fettsäuren ist als Polyolkomponente IIb bevorzugt.

Zwar ist aus der DE-OS 23 20 105 bekannt, eine duroplastische Füllmasse aus Diisocyanaten und Rizinusöl, oder, an dessen Stelle, Polyetherpolyolen herzustellen; überraschenderweise hat sich jedoch gezeigt, daß sich mit dem erfindungsgemäß verwendeten Rizinenöl in Kombination mit den geschilderten Polyolmischungskomponenten IIb wesentlich vorteilhaftere Bröselmassen herstellen lassen.

In der Polyolkomponente können, beispielsweise in einer ihrer Mischungskomponenten, zusätzlich Füllstoffe, beispielsweise in Pulverform, enthalten sein, deren spezifisches Gewicht im Bereich des spezifischen Gewichts der Polyolkomponente liegt. Ein solcher besonders geeigneter Füllstoff ist Polyethylenpulver, das bevorzugt in einer Menge von 20 Gew. -%, bezogen auf das Gesamtgewicht, eingesetzt wird. Derartige Füllstoffe können üblicherweise in Mengen bis zu 75 Gew.-% enthalten sein.

Andere Füllstoffe, die die Bedingungen hinsichtlich des spezifischen Gewichts erfüllen, sind ebenfalls geeignet. Diese Füllstoffe sind an sich bekannt und meistens ebenfalls ausgehärtete, pulverförmige Kunststoffmaterialien verschiedener Zusammensetzungen. Die Anforderungen an das spezifische Gewicht sind wichtig, weil sonst beim Vergießen und während des Aushärtungsprozesses die homogene Verteilung des Pulvers in der Masse durch Sedimentation nicht gewährleistet ist.

Bei den erfindungsgemäßen Bröselmassen hat sich überraschenderweise als besonders vorteilhaft erwiesen, daß sie frei von Weichmachern sein können. So müssen und sollen keine externen Weichmacher wie Dibenzyltoluol oder monocyclische Terpenkohlenwasserstoffe oder Paraffinöle in der Bröselmasse enthalten sein. Es hat sich gezeigt, daß die genannten externen Weichmacher im Laufe der Zeit durch Auswandern des Weichmachers nachteilig; darüberhinaus können die Weichmacher in das Kabel eindringen und es zu elektrischen Störungen führen. Schließlich ist es bedenklich, wenn diese Stoffe in das Erdreich gelangen.

Es hat sich aber auch gezeigt, daß bei den erfindungsgemäßen Bröselmassen vollständig auf Füllstoffe verzichtet werden kann. Der Vorteil besteht darin, daß keine Festkörper in die Polyolkomponente eingearbeitet werden müssen, wodurch sich die Lagerstabilität erhöht, weil keine Sedimentationsprozesse auftreten können.

Wenn die Polyolkomponente ausreichend wasserfrei hergestellt und gelagert wird, kann ebenfalls auf sonst an sich übliche -insbesonder bis zu 10 Gew.-% enthaltene - feste Bestandteile wie Zeolith als Trockenmittel verzichtet werden. Solche gänzlich festkörperfreien erfindungsgemäßen Bröselmassen sind transparent, so daß nach der Verarbeitung beispielsweise bei Einsatz zum Abdichten von Kabeln in einer Kabelmuffe, der Kabelverlauf bzw. die Adern und die Spleißstellen sichtbar bleiben, wodurch mögliche Suche nach Defekten einer solchen Verbindung entscheidend erleichtert wird.

Die erfindungsgemäßen Bröselmassen können Polymerisationsbeschleuniger enthalten, wobei Organozinnverbindungen wie Dibutylzinndilaurat oder tertiäre Amine bevorzugt sind. Wenn die erfindungsgemäße Bröselmasse ohne Polymerisationsbeschleuniger zwar gut bröselbar jedoch etwas zu klebrig ist, läßt sich durch Zusatz von Polymerisationsbeschleuniger die Klebrigkeit bei Herstellung der erfindungsgemäßen Bröselmasse auf das notwendige und geeignete Maß herabsetzen; die diesbezügliche zuzusetzende Menge läßt sich durch einfache Handversuche bestimmen, wobei darauf zu achten ist, daß die Topfzeit nicht unter einen Wert von etwa 5 Minuten sinkt. Die Obergrenze sollte 2 Gew.-% nicht überschreiten.

Auf 100 Gewichtsteile erfindungsgemäßer Polyolmischung können bevorzugt 5 bis 30 Gewichtsteile der Diisocyanatkomponente verwendet werden.

Das Verhältnis von Polyolkomponente I zu Polyolkomponente IIb in der Polyolmischung liegt bevorzugt im Bereich von 20 : 80 bis 80 : 20 Gewichtsteilen.

Die erfindungsgemäße Polyolmischung kann bis zu 20 Gew.-% andere Polyole, beispielsweise Polyether-polyester-polyole gemäß DE 28 47 383, sowie ggf. die genannten Zusätze oder interne Weichmacherzusätze (wie Guerbet-Alkohole, z.B. 2-Octyldodecanol) enthalten. Zur Herstellung der Bröselmassen werden (A) und (B) innig miteinander vermengt und in eine verspleißte Kabelenden umschließende Kabelmuffe gefüllt.

Die Erfindung wird anhand der folgenden Versuche näher erläutert.

Es wurden folgende Produkte eingesetzt:

Polyolkomponente I: Rizinenöl

| OH-Zahl: | max. 25 |
|---|---|
| Viskosität, 20°C: | ca. 300 mPa·s |
| Jodzahl: | ca. 145 |
| SZ.: | max. 4 |

Polyolkomponente IIa: Polybutadiendiol

| Molekulargewicht: | ca. 2800 |
|---|---|
| OH-Zahl: | ca. 46,6 |
| Viskosität, 25°C: | ca. 9000 mPa·s |
| Jodzahl: | ca. 400 |
| $H_2O$: | < 0,1% |

Polyolkomponente IIb: Ringöffnungsprodukt eines epoxidierten Sojabohnenöls mit Vorlauffettsäure (Fettsäureschnitt mit Monocarbonsäuren von 6 bis 12 C Atomen)

| OH-Zahl: | 85 - 100 |
|---|---|
| Viskosität, 25°C: | ca. 4000 mPa·s |
| Verseifungszahl: | ca. 239 |
| Jodzahl: | ca. 3,4 |
| $H_2O$: | < 0,1% |

Diisocyanatkomponente:

technisches Diphenylmethan-4,4′-diisocyanat (MDI)-polymer (30% NCO Gehalt)

In der folgenden tabellarischen Zusammenfassung sind Zusammensetzung und Eigenschaften erfindungsgemäßer Bröselmassen und von Vergleichsmassen wiedergegeben.

Die erfindungsgemäßen Broselmassen 1 und 2 weisen gute Bröseleigenschaften auf. Fur den speziellen Zweck der Abdichtung von Kabeln in einer Kabelmuffe war die Topfzeit zu lang; außerdem zeigte die Masse Phasentrennung. Durch Zugabe von 0,5 Gewichtsteilen tertiäres Amin als Katalysator bei der Herstellung der Bröselmasse 2 konnte die Phasentrennung aufgehoben werden, wobei gleichzeitig eine geeignete Topfzeit erzielt wurde (Bröselmasse 3).

Für den speziellen Zweck der Abdichtung von Kabeln in einer Kabelmuffe war die Bröselmasse 3 jedoch zu klebrig und die Topfzeit zu lang. Durch Zugabe von 0,5 Gewichtsteilen tertieres Amin als Katalysator bei der Herstellung der Bröselmasse 4 konnte die Klebrigkeit auf das geeignete Maß zurückgestellt werden, wobei gleichzeitig eine geeignete Topfzeit erzielt wurde.

Die Massen 5 und 6 unterscheiden sich durch die vorhergehenden erfindungsgemäßen Bröselmassen im wesentlichen dadurch, daß keine Polyolmischung sondern, im Fall der Masse 5, als Polyolkomponente lediglich das Polyol IIb und, im Fall der Masse 6, als Polyolkomponente lediglich IIa eingesetzt wurde. In beiden Fällen wurden Massen erhalten, die das erfindungsgemäß angestrebte Bröselverhalten nicht aufwiesen.

a. <u>Gießharzzusammensetzung</u>

Einzelbestandteile (Gew.-Teile)

|  | 1 | 2 | Vergleichsbeispiel 3 | Vergleichsbeispiel 4 |
|---|---|---|---|---|
| I Polyol | 50 | 50 | 50 | 50 |
| IIa Polyol | -- | -- | 50 | 50 |
| IIb Polyol | 50 | 50 | -- | -- |
| Viskositäten mPa·s (27°C) | 520 | 520 | 1300 | 1300 |
| Diisocyanat | | | | |
| MDI-Po mer 30 % NCO | 16 | 16 | 9 | 9 |
| Trockenmittel | | | | |
| Zeolith-Paste (50%ig in Rizinusöl) | 5 | 5 | 5 | 5 |
| Katalysator | | 0,5 | | 0,5 |
| tert. Amin | | | | |
| (Dabco 33 LV Air-Products) | | | | |
| Topfzeit (27°C) | >3 h | ~25min. | ~45min. | ~13min. |
| b. <u>Eigenschaften</u> | | | | |
| Shore A-Härte (27°C) | | | | |
| n. 24 Stunden | 21 o | 20 | 7 * | 9 |
| n. 48 Stunden | 22 o | 21 | 12 * | 10 |
| n. 72 Stunden | 29 o | 21 | 9 * | 10 |
| n. 168 Stunden | 21 o | 29 | 1 * | 10 |
| Reißfestigkeit in Mpa | | | | 0,17 |
| Dehnung in % | | 6,9 | | 28,8 |
| Spezifischer Durchgangswiderstand n. 168 h Ohm·cm | | $1{,}85.10^{14}$ | | $6{,}5.10^{11}$ |
| gut broselbar | | | | |

* stark klebrig

o Phasentrennung

a. <u>Gießharzzusammensetzung (Fortsetzung)</u>
Einzelbestandteile (Gew.-Teile)

| | Vergleichsbeispiel 5 | Vergleichsbeispiel 6 |
|---|---|---|
| I Polyol | -- | -- |
| IIa Polyol | -- | 100 |
| IIb Polyol | 100 | -- |
| Viskositäten mPa·s (27°C) | 3100 | 9000 |
| Diisocyanat | | |
| MDI-Polymer 30 % NCO | 25 | 11 |
| **Trockenmittel** | | |
| Zeolith-Paste (50%ig in Rizinusöl) | 5 | 5 |
| Katalysator | | 0,5 |
| tert. Amin | | |
| (Dabco 33 LV Air-Products) | | |
| Topfzeit (27°C) | ~ 10min. | ~ 5min. |
| b. <u>Eigenschaften</u> | | |
| Shore A-Härte (27°C) | | |
| n. 24 Stunden | 56 | 27 |
| n. 48 Stunden | 58 | 30 |
| n. 72 Stunden | 61 | 32 |
| n. 168 Stunden | 61 | 33 |
| Reißfestigkeit in Mpa | 1,4 | 0,18 |
| Dehnung in % | 38,8 | 79,5 |
| Spezifischer Durch-gangswiderstand n. 168 h Ohm·cm | $4,5.10^{15}$ | $4.10^{16}$ |
| | nicht bröselnd | |

* stark klebrig
o Phasentrennung

c. **Wasserlagerungstest, Bröselmasse entspricht Beispiel 2:**

Probekörper wurden ganz in Wasser eingetaucht und bei Raumtemperatur gelagert.

| | Durchgangswiderstand Ohm cm | Wasseraufnahme % |
|---|---|---|
| Start | $1,85 \cdot 10^{14}$ | 0 |
| n. 1 Tagen | $1,15 \cdot 10^{14}$ | 0,1 |
| n. 8 Tagen | $1,05 \cdot 10^{14}$ | 0,2 |
| n. 30 Tagen | $6,58 \cdot 10^{13}$ | 0,2 |

**Patentansprüche**

1. Bröselmasse aus einer Polyolkomponente (A) und einer Isocyanatkomponente (B), dadurch gekennzeichnet, daß (A) eine Mischung aus Rizinenöl (I) und einem Esterpolyole enthaltendem Ringöffnungsprodukt (IIb) eines epoxidierten Pflanzenöls mit ungesättigten oder gesättigten kurzkettigen, linearen oder verzweigten Fettsäuren ist.

2. Bröselmasse nach Anspruch 1, dadurch gekennzeichnet, daß die Isocyanatkomponente reines oder technisches Diphenylmethan-4,4'-diisocyanat enthält.

3. Bröselmasse nach mindestens einem der vorhergehenden Ansprüche, dadurch gekennzeichnet, daß das Ringöffnungsprodukt (IIb) aus Fettsäuren des Kettenlängenbereichs $C_6$ bis $C_{22}$ hergestellt wurde.

4. Bröselmasse nach mindestens einem der vorhergehenden Ansprüche, dadurch gekennzeichnet, daß sie 0 bis 75 Gew.-%, vorzugsweise 0 Gew.-% eines an sich bekannten Füllstoffes wie Polyethylenpulver enthält.

5. Bröselmasse nach mindestens einem der vorhergehenen Ansprüche, dadurch gekennzeichnet, daß sie zusätzlich 0 bis 10 Gew.-%, insbesondere 0 Gew.-% eines an sich bekannten Trockenmittels wie Zeolith enthält.

6. Bröselmasse nach mindestens einem der vorhergehenden Ansprüche, dadurch gekennzeichnet, daß sie einen an sich bekannten Polymerisationsbeschleuniger - wie Organozinn- oder tertiäre Aminverbindungen - in Mengen von 0 bis 2 Gew.-% enthält.

7. Bröselmasse nach mindestens einem der vorhergehenden Ansprüche, dadurch gekennzeichnet, daß das Gewichtsverhältnis von Polyolmischung zu Diisocyanat 100 : 5 bis 100 : 30 beträgt.

8. Bröselmasse nach mindestens einem der vorhergehenden Ansprüche, dadurch gekennzeichnet, daß das Mischungsverhältnis der Mischungskomponenten in der Polyolkomponente 20 : 80 bis 80 : 20 Gewichtsteile beträgt.

9. Bröselmasse nach mindestens einem der vorhergehenden Ansprüche, dadurch gekennzeichnet, daß die Polyolmischung bis zu 20 Gew.-% andere Polyole und/oder externe oder interne Weichmacher enthält.

10. Verfahren zur Herstellung von Bröselmassen nach mindestens einem der Ansprüche 1 bis 9, dadurch gekennzeichnet, daß die Polyolkomponente (A) und die Isocyanatkomponente (B) innig miteinander vermengt werden und diese Mischung in eine verspleißte Kabelenden umschließende Kabelmuffe gefüllt wird.

11. Verwendung der Bröselmassen nach mindestens einem der Ansprüche 1 bis 9 zum Isolieren von verspleißten Kabelenden.

## Claims

1.  A friable sealing compound of a polyol component (A) and an isocyanate component (B), characterized in that (A) is a mixture of ricinene oil (I)
    an ester polyols containing
    ring opening product (IIb) of an epoxidized vegetable oil with unsaturated or saturated short-chain linear or branched fatty acids.

2.  A friable sealing compound as claimed in claim 1, characterized in that the isocyanate component contains pure or technical diphenyl methane-4,4'-diisocyanate.

3.  A friable sealing compound as claimed in at least one of the preceding claims, characterized in that the ring opening product (IIb) is made of $C_{6-22}$ fatty acids.

4.  A friable sealing compound as claimed in at least one of the preceding claims, characterized in that it contains 0 to 75% by weight, but preferably 0 %, fillers known per se, such as polyethylene powder.

5.  A friable sealing compound as claimed in at least one of the preceding claims, characterized in that it additionally contains 0 to 10% by weight, but more particularly 0 %, drying agents known per se, such as zeolite.

6.  A friable sealing compound as claimed in at least one of the preceding claims, characterized in that it contains a polymerization accelerator known per se, such as organotin or tertiary amine compounds, in quantities from 0 to 2% by weight.

7.  A friable sealing compound as claimed in at least one of the preceding claims, characterized in that the ratio by weight of the polyol mixture to the diisocyanate is 100:5 to 100:30.

8.  A friable sealing compound as claimed in at least one of the preceding claims, characterized in that the mixing ratio between the mixture components in the polyol component is 20:80 to 80:20 parts by weight.

9.  A friable sealing compound as claimed in at least one of the preceding claims, characterized in that the polyol mixture contains up to 20% by weight of other polyols and/or external or internal plasticizers.

10. A process for the production of friable sealing compounds as claimed in at least one of the claims 1 to 9, characterized in that the polyol component (A) and the isocyanate component (B) are thoroughly mixed and the resulting mixture is introduced into a joint box surrounding cable ends to be spliced.

11. The use of the friable sealing compounds as claimed in at least one of the claims 1 to 9 for insulating spliced cable ends.

## Revendications

1.  Matière friable à partir d'un composant polyol (A) et d'un composant isocyanate (B), caractérisée en ce que (A) est un mélange d'huile de ricin (I) et d'un produit d'ouverture de cycle (IIb) contenant des esterpolyols d'une huile végétale époxydée avec des acides gras insaturés ou saturés à chaîne courte, linéaires ou ramifiés.

2.  Matière friable selon la revendication 1, caractérisée en ce que le composant isocyanate contient du diphenylmethane-4,4'-diisocyanate pur ou industriel.

3.  Matière friable selon au moins une des revendications précédentes, caractérisée en ce que le produit d'ouverture de cycle (IIb) était produit à partir d'acide gras de la zone des longueurs de chaîne $C_6$ à $C_{22}$.

4.  Matière friable selon au moins une des revendications précédentes, caractérisée en ce qu'elle contient de 0 à 75 % en poids, de préférence 0 % en poids d'une matière de charge connue comme de la poudre de polyéthylène.

5. Matière friable selon au moins une des revendications précédentes, caractérisée en ce qu'elle contient en supplément de 0 à 10 % en poids, en particulier 0 % en poids d'un agent de séchage comme la zéolite.

6. Matière friable selon au moins une des revendications précédentes, caractérisée en ce qu'elle contient un accélérateur de polymérisation connu, comme des composés organostanniques ou des composés d'amine tertiaire, en quantité de 0 à 2 % en poids.

7. Matière friable selon au moins une des revendications précédentes, caractérisée en ce que le rapport de poids du mélange de polyols au diisocyanate va de 100:5 jusqu'à 100:30.

8. Matière friable selon au moins une des revendications précédentes, caractérisée en ce que le rapport de mélange des composants du mélange dans le composant polyol va de 20:80 à 80:20 parties en poids.

9. Matière friable selon au moins une des revendications précédentes, caractérisée en ce que le mélange de polyols contient jusqu'à 20 % en poids d'autres polyols et/ou des plastifiants externes ou internes.

10. Procédé pour produire des matières friables selon au moins une des revendications 1 à 9, caractérisé en ce que le composant polyol (A) et le composant isocyanate (B) sont mélangés l'un avec l'autre intimement et ce mélange est chargé dans un manchon de câble entourant des extrémités de câble épissées.

11. Utilisation des matières friables selon au moins une des revendications 1 à 9 pour isoler des extrémités de câble épissées.